# EUROPÄISCHE PATENTANMELDUNG

(11) **EP 2 759 660 A2**
(43) Veröffentlichungstag der Anmeldung: **30.07.2014**
(21) Anmeldenummer: 14150680.8
(22) Anmeldetag: 09.01.2014
(51) Int. Cl.: E04H 12/08

(54) **Flanschteil für einen Turm einer Windkraftanlage**

(30) Priorität: 23.01.2013 DE 102013201072
(71) Anmelder: Siegthalerfabrik GmbH, 57080 Siegen (DE)
(72) Erfinder: Wolf, Dietmar, 57234 Wilnsdorf (DE); Koop, Karsten, 18057 Rostock (DE); Manteuffel, Christine, 19069 Lübstorf (DE)
(74) Vertreter: Bendel, Christian

(57) **Zusammenfassung**

Die Erfindung betrifft ein Flanschteil für einen Turm einer Windkraftanlage, umfassend einen um eine Achse orientierten Ringflansch (9), eine Mehrzahl von an dem Ringflansch (9) angeordneten Durchbrechungen (13) zur Festlegung des Ringflansches (9) an einer Struktur, die auf einer ersten Seite des Ringflansches (9) an diesen angrenzt, wobei die Durchbrechungen (13) in einer Umfangsrichtung des Ringflansches (9) nacheinander angeordnet sind und in einer zu der Achse parallelen Richtung von Haltegliedern durchgriffen werden, wobei das Flanschteil als materialeinheitlich einstückiges Bauteil ausgebildet ist, wobei zwischen zumindest einigen Paaren der nacheinander angeordneten Durchbrechungen jeweils ein Steg (14) in axialer Richtung oberhalb der Durchbrechungen (13) angeordnet ist, der sich in einer mit der Achse überdeckenden Schnittebene erstreckt.

## Beschreibung

Die Erfindung betrifft ein Flanschteil für einen Turm einer Windkraftanlage nach dem Oberbegriff des Anspruchs 1 sowie ein Verfahren zur Herstellung eines erfindungsgemäßen Flanschteils und eine Verwendung eines erfindungsgemäßen Flanschteils für einen Turm einer Windkraftanlage.

Aus der Praxis des Baus von Windkraftanlagen sind Türme bekannt, bei denen ringförmige Flanschteile an rohrförmige Abschnitte des Turms angeschweißt sind. Mittels der Flanschteile werden die einzelnen Abschnitte der Türme untereinander verbunden oder es erfolgt die Verbindung mit einer Turmbasis oder mit einem Turmkopf.

US 8,046,902 B2 beschreibt die Herstellung von Flanschen aus kreisförmigen Ringen.

Es ist die Aufgabe der Erfindung, ein Flanschteil anzugeben, das eine einfache Montage einer Windkraftanlage ermöglicht.

Diese Aufgabe wird für ein eingangs genanntes Flanschteil erfindungsgemäß mit den kennzeichnenden Merkmalen des Anspruchs 1 gelöst.

Durch das Vorsehen der Stege zwischen benachbarten Durchbrechungen wird eine hohe Steifigkeit des Flansches erzielt. Eine Vereinfachung der Montage des Turmes kann dadurch gegeben sein, dass bei einem Anschweißen des Flanschteils kein oder nur wenig hitzebedingter Verzug auftritt. Ein Nachbearbeiten des angeschweißten Flanschteils kann dann entweder vollständig entfallen oder ist im Aufwand erheblich reduziert.

Durch die materialeinheitlich einstückige Ausbildung des Flanschteils kann das Flanschteil durch spanende und fräsende Bearbeitung erstellt werden. Dies gilt insbesondere für die Ausformung der Stege.

Besonders bevorzugt sind zumindest ein ringförmiger Sockel, eine Außenwand und die Stege des Flanschteils materialeinheitlich einstückig miteinander ausgeformt.

Insbesondere ist eine Anbringung der Stege durch Schweißung nicht vorgesehen, wodurch hohe Festigkeit und Maßgenauigkeit des Flanschteils erreicht werden.

Weiterhin bevorzugt kann es vorgesehen sein, dass zwischen sämtlichen Paaren der nacheinander angeordneten Durchbrechungen jeweils ein Steg vorgesehen ist.

Je nach Anforderungen ermöglicht die erfindungsgemäße Ausbildung des Flansches auch eine kleinere Dimensionierung des Flanschquerschnitts, da bei gegebenem Flanschquerschnitt eine größere Steifigkeit resultiert.

Allgemein vorteilhaft ist es vorgesehen, dass die Stege mit einer parallel zu der Achse erstreckten Außenwand des Ringflansches verbunden sind, wobei die Außenwand einen Rand aufweist, der mit einer zweiten Struktur des Turms verschweißbar ist, die auf einer zweiten Seite des Ringflansches an diesen angrenzt. Ein thermischer Verzug des Flanschteils beim Anschweißen ist dabei durch die erfindungsgemäße Ausgestaltung und die hohe Steifigkeit reduziert.

Bei hierzu alternativen Ausführungsformen können die Stege auch mit einer parallel zu der Achse erstreckten Innenwand des Ringflansches verbunden sein. Die Innenwand kann ebenfalls einen Rand aufweisen, der mit einer zweiten Struktur des Turms verschweißbar ist, die auf einer zweiten Seite des Ringsflansches an diesen angrenzt. Solche Ausführungen können insbesondere dann Verwendung finden, wenn die zweite Struktur einen deutlich kleineren Durchmesser aufweist als die auf der ersten Flanschseite angeschraubte erste Struktur. Eine Innenwand es Flanschteils ist dabei als gegenüber den Stegen und Durchbrechungen radial innen liegender, axial erstreckter, zylindrischer Abschnitt definiert. Entsprechend ist eine Außenwand gegenüber den Stegen und Durchbrechungen radial außen verlaufend.

Allgemein wird unter einem Flanschteil im Sinne der Erfindung eine kompakte und im Unterschied zu einem montierten Turm oder Turmteil einfach transportable Einheit verstanden. Je nach Dimensionierung und Transportmöglichkeiten ist es im Sinne der Erfindung möglich, dass das Flanschteil erst an einem Aufstellort der Windkraftanlage mit der zweiten Struktur verschweißt wird.

Der Turm der Windkraftanlage kann auf beliebige Weise ausgebildet sein, zum Beispiel vollständig als Rohrturm, in Jacket-Bauweise, in Tripile-Bauweise oder auch in Tripod-Bauweise, wobei jeweils zumindest ein rohrförmiger Abschnitt zur Anbindung des Flanschteils vorliegt.

Das erfindungsgemäße Flanschteil kann besonders bevorzugt entweder als oberer Kopfflansch des Turms Verwendung finden oder auch als unterer Basisflansch.

Im Fall des Einsatzes als Kopfflansch kann die auf der ersten Seite festzulegende Struktur zum Beispiel eine Scheibe für eine Windrichtungsnachführung oder eine andere untere Struktur einer Gondel der Windkraftanlage sein. Die erste Seite des Flanschteils ist dabei nach oben orientiert.

Im besonders bevorzugten Fall des Einsatzes als Basisflansch kann die auf der ersten Seite festzulegende Struktur zum Beispiel eine Turmbasis sein, wobei die erste Seite ebenfalls nach oben orientiert ist. Es hat sich in der Praxis des Baus von Offshore-Windkraftanlagen gezeigt, dass insbesondere beim Verschweißen von konventionellen Flanschteilen mit einer Turmbasis Materialverzug auftritt, zumal die Verschweißung je nach Bauart des Turmes am Montageort der Windkraftanlage erfolgen kann.

Die Durchbrechungen in dem Ringflansch können allgemein jede beliebige Form zur Festlegung der Struktur aufweisen. Bei einer einfachen Detailgestaltung kann es sich um durchgängige Schraubenlöcher handeln. Ein solches Schraubenloch kann je nach Anforderungen glattwandig sein, ein Innengewinde aufweisen oder auch als Langloch ausgebildet sein. Besonders bevorzugt handelt es sich um kreisförmige, parallel zu der Achse erstreckte Bohrungen. Durch diese Bohrungen können auf einfache Weise Schrauben als Halteglieder gesteckt werden, die den Ringflansch dann über Muttern mit einem weiteren Ringflansch der angrenzenden Struktur verbinden.

Der erfindungsgemäße Flansch betrifft vor allem Großanlagen, weshalb ein bevorzugter Außendurchmesser der Flanschringe wenigstens 2 Meter, bevorzugt wenigstens 2,5 Meter, beträgt. Es kann sich je nach Anforderungen um eine Offshore-Windkraftanlage oder auch um eine landgestützte Windkraftanlage handeln.

Die Erfindung ist besonders bevorzugt für große Offshore-Windkraftanlagen verwendbar. Solche Anlagen zeichnen sich durch groß dimensionierte Bauteile und hohe Wandstärken aus. Dies bringt wiederum große Wärmeeinträge bei Verschweißen des Flanschteils mit dem Turm mit sich. Wandstärken der Struktur oder des Randes können für Offshore-Anlagen mehr als 4 cm betragen. Die Bauteile werden regelmäßig über die gesamte Wandstärke durchgeschweißt.

Unter einem Verschweißen im Sinne der Erfindung wird jede stoffschlüssige Verbindung durch ein geeignetes Schweißverfahren verstanden. Bevorzugt erfolgt eine in Umfangsrichtung durchgängige Verschweißung, die eine wind- und wasserdichte Verbindung bereitstellt. In der radialen Richtung werden ebenfalls sämtliche Schweißnähte als durchgängig ausgeführt.

Bei einem bevorzugten Ausführungsbeispiel der Erfindung ist eine senkrecht zu der Schnittebene bestimmte, minimale Dicke der Stege nicht kleiner als ein Durchmesser der benachbarten Durchbrechungen.

Zur einfachen Anbringung der Halteglieder befinden sich die Durchbrechungen in einem Sockel des Ringflansches, wobei der Sockel an einem den Stegen zugewandten Ende der Durchbrechung jeweils eine Auflagefläche aufweist. Die Halteglieder, zum Beispiel Schrauben, können dann durch die Durchbrechungen gesteckt werden und auf der Auflagefläche aufliegen. In bevorzugter Weiterbildung ist oberhalb der Auflageflächen jeweils ein Freiraum angeordnet, wobei ein kleinster, senkrecht zu der Achse bestimmter Durchmesser des Freiraums wenigstens um 40% größer ist als ein Durchmesser der Durchbrechungen.

Um eine besonders gute Versteifung des Flanschrings zu gewährleisten, haben die Stege eine maximale Höhe oberhalb der Auflagefläche, die größer als die Hälfte einer in axialer Richtung bestimmten Länge der Durchbrechungen ist.

Allgemein vorteilhaft ist durch eine Oberkante der Stege in der Schnittebene eine Verlaufskurve definiert, deren Abszisse durch einen Radius des Flanschrings gebildet ist. Bei einer möglichen Weiterbildung hat die Verlaufskurve dabei einen konkav gebogenen, insbesondere teilkreisförmigen Abschnitt. Bei einer alternativen Ausführungsform kann die Verlaufskurve aber auch als gerader Abschnitt ausgebildet sein. Allgemein bevorzugt kann die Verlaufkurve radial einwärts abfallend sein, so dass die Höhe der Stege oberhalb der Auflagefläche in dieser Richtung abnimmt.

Bei einer möglichen Ausführungsform kann der Ringflansch an der zweiten Seite einen umlaufenden Kragen aufweisen, der nach Art einer Hülse ausgeformt ist und über eine Oberkante der Stege hinausragt. Ein solcher Kragen kann einstückig mit dem Ringflansch ausgebildet sein, zum Beispiel durch spanende Ausformung aus einem entsprechend dimensionierten Profilkörper. Es kann sich aber auch um ein angeschweißtes Hülsenglied handeln. Ein Vorteil eines solchen Kragens ist ein weiter verringerter Wärmeeintrag in den Ringflansch während einer Verschweißung am Ort des Turmaufbaus.

In jedem Fall kann der Kragen zur Vereinfachung der Flanschherstellung und zur Materialeinsparung relativ kurz in der axialen Richtung ausgebildet sein. Besonders bevorzugt ist dabei eine axiale Höhe des Flanschringes bis zur Oberkante der Stege größer als eine axiale Höhe des Kragens. Bei einer vorgegebenen gegebenen axialen Länge des Flanschteils kann hierdurch zum einen ein ausreichend großer Ansatz zum Anschweißen des Hülsenglieds sichergestellt werden, und zum anderen ist die gesamte axiale Höhe des Flanschteils im Interesse von Transport und Handhabbarkeit begrenzt.

Allgemein vorteilhaft ist im Interesse von Transport und Handhabbarkeit vorgesehen, dass eine Höhe des Flanschteils in axialer Richtung nicht größer ist als die Hälfte eine Außendurchmesser des Ringflansches.

Bei einer allgemein bevorzugten Weiterbildung der Erfindung ist es vorgesehen, dass der Ringflansch auf der ersten Seite eine bearbeitete Oberfläche aufweist. Bevorzugt, aber nicht notwendig umfasst dies eine spanende Bearbeitung, zum Beispiel Drehen, Fräsen und/oder Schleifen. Eine solche Bearbeitung stellt eine hohe Maßhaltigkeit der Oberfläche der ersten Seite sicher. Die Bearbeitung umfasst insbesondere eine Endbearbeitung zum unmittelbaren Anbringen der Struktur an dem Flanschteil, nachdem dieses mit dem rohrförmigen Abschnitt des Turms verschweißt wurde. Hierdurch ist ein erheblicher Vorteil gegenüber vorbekannten Flanschen erzielt, bei denen aufgrund eines Verzugs beim Schweißvorgang regelmäßig ein Nachbearbeiten der ersten Seite nach einem Anschweißen des Flansches erfolgen muss.

Die Aufgabe der Erfindung wird zudem durch ein Verfahren zur Herstellung eines erfindungsgemäßen Flanschteils gelöst, umfassend die Schritte:
a. Bereitstellen eines ringförmig gebogenen Profilkörpers;
b. Ausbilden der Stege und der Durchbrechungen in dem Profilkörper mittels spanender Bearbeitung.

Bereits bei herkömmlichen Flaschen erfolgt eine spanende Bearbeitung mittels Drehen und Fräsen, ausgehend von einem Vollprofil mit meist rechteckigem Querschnitt. Die vorliegende Formgebung kann daher auf denselben Herstellungsvorrichtungen mittels Drehen und Fräsen erfolgen.

In bevorzugter Weiterbildung umfasst das Verfahren zudem den Schritt des Biegens eines geraden Profilkörpers zu dem ringförmigen Profilkörper. Die Enden des gebogenen Ringes werden zweckmäßig verschweißt. Der gebogene Ring kann in Schritt b mit den Durchbrechungen und Stegen versehen werden.

Bei einem hierzu alternativen Verfahren kann der ringförmig gebogene Profilkörper aber auch durch Walzschritte aus einem gelochten Rohling geformt werden.

Allgemein kann für einen erfindungsgemäßen Flansch jeder Stahl verwendet werden, der auch sonst im Bau von Windkraftanlagen üblich ist.

Bei einer besonders bevorzugten Ausführungsform ist der Ringflansch als ringförmig gebogenes und an einer Nahtstelle stoßbündig verschweißtes Profilteil ausgebildet. Hierdurch ist eine besonders einfache Fertigung ermöglicht. Die Querschnittsform des Profilteils kann einen je nach Anforderungen geformten Querschnitt aufweisen. Bei einer einfachen Ausführungsform kann der Querschnitt im Wesentlichen rechteckig sein. Bei bevorzugten Ausführungsformen können auch weitere Ausformungen vorliegen, wie zum Beispiel vorragende Strukturen.

Bei einer hierzu alternativen Ausführungsform ist der Ringflansch als in Umfangsrichtung nahtfreies Bauteil ausgebildet. Ein solcher Ringflansch kann zum Beispiel durch Walzvorgänge und/oder Schmiedevorgänge aus einem ringförmigen Werkstück ausgeformt werden. Dabei kann zunächst eine Scheibe aus einem Rohling wie etwa einer Stahlbramme abgetrennt, nachfolgend gelocht und dann zu dem Ringflansch umgeformt werden.

Bei einem besonders bevorzugten Verfahren ist es vorgesehen, dass nach einem Anschweißen des Flanschteils an den rohrförmigen Abschnitt des Turms keine Nachbearbeitung des Ringflansches mehr erfolgt. Hierdurch wird am Ort einer Vormontage, insbesondere am Ort der Errichtung der Windkraftanlage, erheblicher Aufwand eingespart. Die Merkmale des erfindungsgemäßen Flanschteils ermöglichen ein solches Vorgehen, da ein Verzug des Ringflansches im Bereich einer Oberfläche der ersten Seite im Zuge der Montage kaum auftritt.

Die Aufgabe der Erfindung wird zudem durch die Verwendung eines erfindungsgemäßen Flanschteils zur Erstellung eines Turms einer Windkraftanlage gelöst. Besonders beim Bau von Windkraftanlagen zeigt der Einsatz eines erfindungsgemäßen Flansches aufgrund der großen Flanschdurchmesser und weiteren Anforderungen überraschende Erfolge,

Weitere Vorteile und Merkmale der Erfindung ergeben sich aus dem nachfolgend beschriebenen Ausführungsbeispiel sowie aus den abhängigen Ansprüchen.

Nachfolgend wird ein bevorzugtes Ausführungsbeispiel der Erfindung beschrieben und anhand der anliegenden Zeichnungen näher erläutert.
- Fig. 1: zeigt eine schematische Ansicht eines erfindungsgemäßen Offshore-Windturmes mit einer Turmbasis in Monopile-Bauweise.
- Fig. 2: zeigt eine räumliche Darstellung eines ersten Ausführungsbeispiels eines erfindungsgemäßen Flansches.
- Fig. 3: zeigt eine Aufsicht von unten auf den Flansch aus Fig. 2.
- Fig. 4: zeigt eine seitliche Aufsicht auf den Flansch aus Fig. 2.
- Fig. 5: zeigt eine Schnittansicht des Flansches aus Fig. 3 entlang der Linie C-C.
- Fig. 6: zeigt eine zu Fig. 5 analoge Schnittansicht eines weiteren Ausführungsbeispiels mit einer axial erstreckten Innenwand.

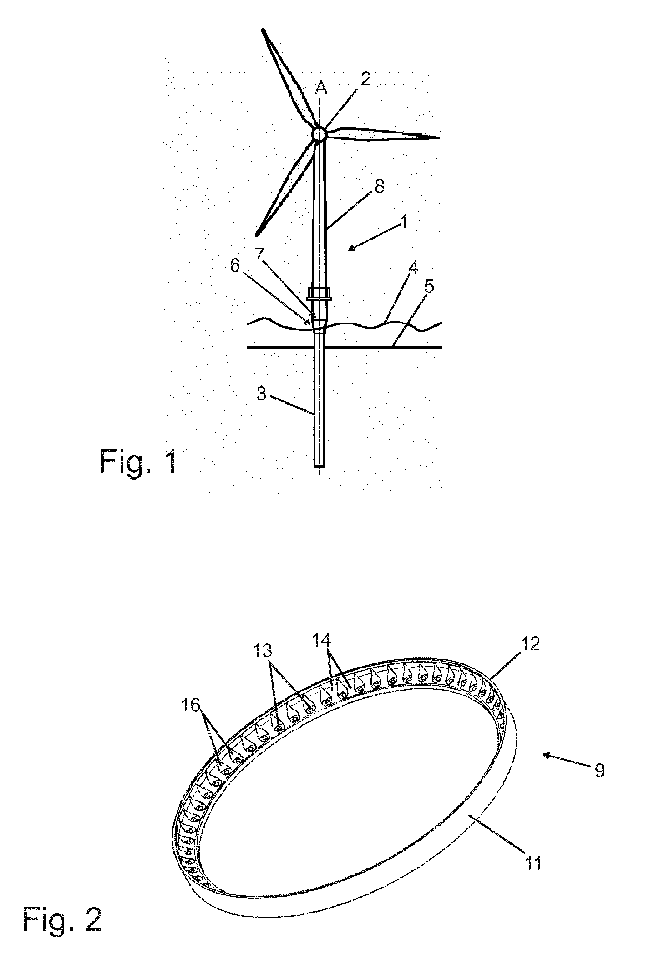

Die in Fig. 1 gezeigte Windkraftanlage umfasst einen Turm 1, auf dessen oberes Ende ein Windgenerator 2 aufgesetzt ist. Der Turm 1 umfasst eine Turmbasis 3, mit der er unterhalb einer Wasseroberfläche 4 in einem Gewässerboden bzw. Meeresboden 5 verankert ist. Sofern nicht anders bezeichnet, bestehen die nachfolgend beschriebenen Bauteile aus Stahl.

Die Verankerung erfolgt vorliegend durch Einrammen eines Rohres der Turmbasis in den Meeresboden, wonach das überstehende Rohr mit Füllmittel wie etwa Beton gefüllt und ein Übergangsstück 6 (Fachbegriff: Transition Piece) als Bestandteil der Turmbasis aufgesetzt wird. Durch das Rohr mit dem Übergangsstück 6 wird insgesamt eine erste, untere Struktur des Turmes 1 ausgebildet, die je nach Verlauf des Eintreibvorgangs einen Schiefstand gegenüber der Senkrechten bzw. Schwerkraftrichtung aufweisen kann.

Über dem Übergangsstück 6 der Turmbasis 3 wird dann der weitere Turm aufgebaut, der vorliegend einen rohrförmigen Abschnitt 8 als eine zweite, obere Struktur aufweist. Zuletzt wird der Windgenerator 2 aufgebaut.

Zwischen der ersten Struktur 3, 6 und der zweiten Struktur 8 ist ein Flansch 7 konzentrisch um eine Achse A des Turmes angeordnet, der die beiden Strukturen miteinander verbindet. Der Flansch 7 umfasst Ringflansche, die jeweils mit einer der Strukturen 3, 8 fest, insbesondere stoffschlüssig, verbunden sind. Die aufeinander aufliegenden Ringflansche werden dann über eine Mehrzahl von parallel zu der Achse orientierten Schrauben (nicht dargestellt) formschlüssig aneinander festgelegt.

Ein unteres, erfindungsgemäßes Flanschteil des Flansches 7 umfasst einen unteren Ringflansch 9. Der Ringflansch 9 ist vorliegend daher als Flanschteil einer Turmbasis ausgebildet. Dabei wird der Ringflansch 9 nach einer Montage der Turmbasis am Ort des Turmaufbaus auf das Übergangsstück 6 aufgeschweißt.

Der Ringflansch 9 hat einen Sockel 10 mit einer ebenen Ringfläche 10a auf einer ersten Seite des Ringflansches, wobei der Sockel 10 sich um eine Breite B des Ringflansches in radialer Richtung erstreckt. Über dem Sockel 10 erhebt sich eine zylindrische, glatte Außenwand 11 des Ringflansches. Die axiale Länge der Außenwand 11 entspricht vorliegend einer Höhe H des Ringflansches 9.

Die Außenwand 11 endet auf einer zweiten Seite des Ringflansches 9 in einem umlaufenden Rand 12, der vorliegend eine Dicke D von 4 Zentimetern aufweist. Dieser Rand 12 wird umlaufend und durchgängig mit dem Übergangstück 6 verschweißt, so dass die ebene Stirnfläche 10a des Sockels 10 bzw. die erste Seite des Ringflansches vorliegend nach oben gerichtet ist.

In dem Sockel 10 sind über den Umfang verteilt insgesamt 60 Durchrechungen 13 in Form von kreisrunden Bohrungen vorgesehen, die der Aufnahme der Schrauben dienen. Die Bohrungen 13 münden an ihrer Oberseite in der ebenen Ringfläche 10a. An ihrer Unterseite münden die Bohrungen 13 jeweils in einer kreisrunden Auflagefläche 10b. Die Auflageflächen 10b verlaufen in derselben Ebene, die parallel zu der Ringfläche 10a ist.

Auf der Auflagefläche sind jeweils Köpfe oder Muttern der Schrauben abgestützt (nicht dargestellt), wodurch eine in axialer Richtung wirkende Kraft der Schrauben die Ringflansche gegeneinander zieht.

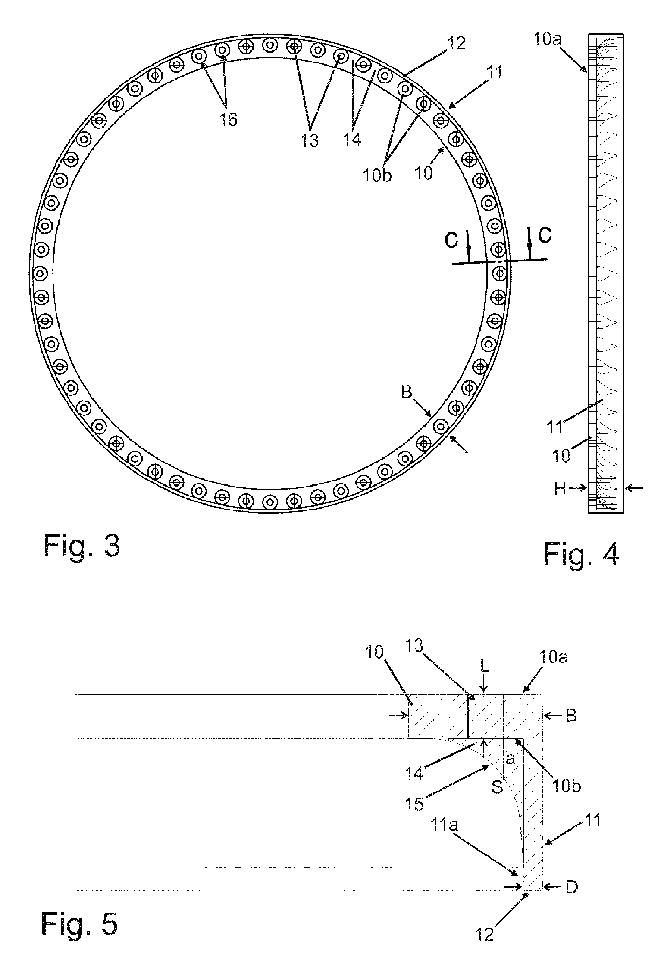

Auf dem Sockel 10 sind Stege 14 angeordnet, die sich in der Umfangsrichtung betrachtet jeweils zwischen zwei aufeinander folgenden Bohrungen 13 befinden. Die Stege 14 erstrecken sich jeweils in einer mit der Achse A überdeckenden Schnittebene, und zwar in axialer Richtung oberhalb der Durchbrechungen 13. Die Schnittansicht C-C gemäß Fig. 5 verläuft entlang einer solchen Schnittebene. Auf der in Fig. 5 gezeigten Schnittfläche des Ringflansches 9 sind die Umrisse der senkrecht zur Zeichnungsebene nächsten Durchbrechung mit gestrichelten Linien angedeutet.

Eine Oberseite der Stege 14 definiert in der Schnittebene eine Verlaufskurve 15, deren Abszisse durch einen Radius des Ringflansches gebildet ist. Die Verlaufskurve 15 ist vorliegend konkav gebogen, wodurch die Masse des Ringflansches bei gegebener Steifigkeit besonders gering ist. Zudem begünstigt diese Formgebung einen möglichst geringen Verzug des Ringflansches 9 bei Verschweißung des Randes 12 mit der entsprechenden Struktur 3, 6.

Die konkave Biegung der Verlaufskurve 15 folgt im Wesentlichen einem Kreisbogen bzw. hat einen annähernd konstanten Krümmungsradius. Der Krümmungsradius der Verlaufskurve 15 bewegt sich in einem Bereich zwischen einem Drittel und dem Doppelten der Breite B des Sockels 10.

Der Ringflansch 9 hat vorliegend einen Kragen 11a, der als hohlzylindrisch geformter, oberer Abschnitt der Außenwand 11 augebildet ist. Der Rand 12 ist an dem Kragen 11a ausgebildet, wobei der Kragen oberhalb eines oberen Endes der Stege angeordnet ist (siehe Fig. 5). Der gesamte Ringflansch 9 ist mit dem Kragen 11a als materialeinheitliches, einstückiges Bauteil ausgebildet. Eine gesamte Höhe H des Ringflansches in axialer Richtung beträgt vorliegend etwa 40 cm, wobei die Höhe des Kragens etwa 5 cm beträgt.

Eine maximale Höhe a der Stege 14 oberhalb der Durchbrechungen 13 kann ist vorliegend durch den Schnittpunkt S einer gedachten Verlängerung (gepunktete Linie in Fig. 5) der radial äußeren Begrenzung einer Durchbrechung 13 auf die Verlaufskurve 15 definiert. Im vorliegenden Beispiel ist diese Höhe a etwa so groß wie eine L der Durchbrechungen 13. Im gegebenen Beispiel entspricht die Länge L der Durchbrechungen 13 zudem einer Dicke des Sockels 10.

In der Umfangsrichtung gemessen beträgt eine minimale Dicke der Stege 13 etwa dem 1,5-fachen des Durchmessers einer Durchbrechung 13. Die Durchbrechungen 13 haben vorliegend einen Durchmesser von knapp 8 cm.

Die Breite B des Sockels 10 beträgt vorliegend etwa 28 cm. Die Länge L der Bohrungen 13 beträgt vorliegend etwa 10 cm. Der Außendurchmesser des gesamten Ringflansches beträgt vorliegend knapp 6 Meter.

Es versteht sich, dass die vorliegend genannte Anzahl von 60 Durchbrechungen 13 bzw. Schrauben auch eine andere Größe haben kann. Insbesondere kann dabei der Durchmesser der einzelnen Schrauben bzw. Durchbrechungen 13 entsprechend angepasst sein. Im vorliegenden Beispiel eines Ringflansches von knapp 6 Metern Durchmesser kann durchaus eine Anzahl von 120 oder auch 180 Schrauben vorgesehen sein, deren jeweiliger Durchmesser entsprechend kleiner ist.

Die Herstellung des Ringflansches 9 wird wie folgt vorgenommen:
- Zunächst wird ein Vollprofil aus Stahl von rechteckigem Querschnitt abgelängt, zum Beispiel durch Walzen oder Strangpressen.
- Das Profil wird zu einem Kreisring gebogen und die stoßbündig aneinander grenzenden Enden werden miteinander verschweißt.
- Der Kreisring mit rechteckigem Querschnitt wird durch Drehen spanend bearbeitet, bis ein Profil mit dem in Fig. 5 gezeigten Querschnitt bzw. der Verlaufkurve der Stege vorliegt.
- Die Auflageflächen 10a werden durch Fräsung ausgeformt, wobei oberhalb der Auflageflächen Freiräume in Form von zylindrischen Ausnehmungen 16 in das Profil eingesenkt werden, wonach die Bohrungen 13 in den Sockel 10 eingebracht werden. Dies kann mittels eines geeignet geformten Werkzeugs auch in einem einzelnen Arbeitsgang erfolgen. Im Ergebnis verbleiben die Stege 14 zwischen den Durchbrechungen 13 bzw. den hohlzylindrischen Ausnehmungen. Die Ausnehmungen 16 haben senkrecht zu der axialen Richtung einen kleinsten Durchmesser, der vorliegend etwas dem 1,5-fachen des Durchmessers der Durchbrechungen 13 entspricht. Hierdurch wird ausreichend Raum für Muttern oder Schraubenköpfe bereitgestellt.

Bei einer alternativen, nicht dargestellten Ausführungsform kann die Formgebung und Fräsung der Freiräume bzw. Ausnehmungen 16 auch so erfolgen, dass gerade Abschnitte in radialer Richtung gefräst werden, so dass die Wände der Stege 14 in radialer Richtung nicht gebogen, sondern gerade sind. In den Boden der Ausnehmung wird dann auf gleiche Weise die Bohrung 13 eingebracht.

Der gesamte Flanschring 9 kann bei Bedarf in einen Ofen verbracht und bei definierter Temperatur über einen vorgegebenen Zeitraum spannungsarm geglüht werden.

Nach dem Abkühlen des spannungsarm geglühten Ringflansches 9 wird zumindest die Oberfläche 10a auf der ersten Seite Ringflansches 9 maßgenau bearbeitet, zum Beispiel durch Schleifen und/oder spanenden Abtrag (Fräsen, Drehen etc.).

Eine Nachbearbeitung der Oberfläche 10a erfolgt nach dem Anschweißen des Ringflansches an der Struktur 3 nicht mehr.

Es versteht sich, dass das vorstehend beschriebene Flanschteil nicht nur an der Turmbasis 3 vorgesehen sein kann, sondern auch an dem rohrförmigen Turmabschnitt 8. Dabei kann es der Verbindung zweier rohrförmiger Turmabschnitte dienen oder auch der Verbindung eines oberen Turmabschnitts mit dem Windgenerator 2. Insbesondere kann die Verbindung mit einer Scheibe zur Windrichtungsnachführung erfolgen, wobei die gute Steifigkeit des erfindungsgemäßen Flansches besonders vorteilhaft ist.

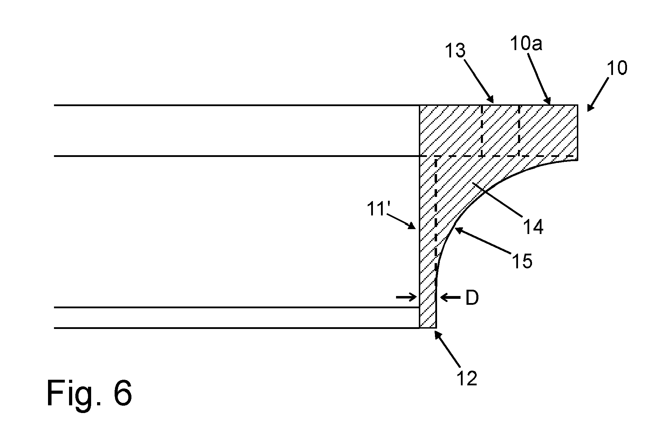

Bei dem in Fig. 6 gezeigten Ausführungsbeispiel verläuft die axial erstreckte Wand als Innenwand 11' des Flanschteils und liegt damit radial innerhalb der Stege 14 und Durchbrechungen 13. Bei einem solchen Flanschteil kann insbesondere eine an den Rand 212 angeschweißte Struktur (Turmteil) einen kleineren Durchmesser haben als die auf der ersten Seite mittels der Durchbrechungen 13 angeschraubte Struktur.

Das Flanschteil gemäß dem Ausführungsbeispiel nach Fig. 6 ist wie das im Fall des ersten Ausführungsbeispiels materialeinheitlich einstückig gefertigt. Die Fertigung durch spanende Bearbeitung, Fräsen, Biegen etc. kann je nach Anforderungen vollständig analog zu dem ersten Ausführungsbeispiel erfolgen.

## Patentansprüche

1. Flanschteil für einen Turm einer Windkraftanlage, umfassend
einen um eine Achse (A) orientierten Ringflansch (9),
eine Mehrzahl von an dem Ringflansch (9) angeordneten Durchbrechungen (13) zur Festlegung des Ringflansches (9) an einer Struktur (3, 6, 8), die auf einer ersten Seite des Ringflansches (9) an diesen angrenzt,
wobei die Durchbrechungen (13) in einer Umfangsrichtung des Ringflansches (9) nacheinander angeordnet sind und in einer zu der Achse (A) parallelen Richtung von Haltegliedern durchgriffen werden,
wobei das Flanschteil als materialeinheitlich einstückiges Bauteil ausgebildet ist,
**dadurch gekennzeichnet,**
**dass** zwischen zumindest einigen Paaren der nacheinander angeordneten Durchbrechungen (13) jeweils ein Steg (14) in axialer Richtung oberhalb der Durchbrechungen (13) angeordnet ist, der sich in einer mit der Achse (A) überdeckenden Schnittebene erstreckt.

2. Flanschteil nach Anspruch 1, **dadurch gekennzeichnet, dass** die Stege (14) mit einer parallel zu der Achse (A) erstreckten Außenwand (11) des Ringflansches (9) verbunden sind, wobei die Außenwand (11) einen Rand (12) aufweist, der mit einer zweiten Struktur (3, 6) des Turms verschweißbar ist, die auf einer zweiten Seite des Ringflansches (9) an diesen angrenzt.

3. Flanschteil nach Anspruch 1, **dadurch gekennzeichnet, dass** die Stege (14) mit einer parallel zu der Achse (A) erstreckten Innenwand (11') des Ringflansches (9) verbunden sind, wobei die Innenwand (11') einen Rand (12) aufweist, der mit einer zweiten Struktur (3, 6) des Turms verschweißbar ist, die auf einer zweiten Seite des Ringflansches (9) an diesen angrenzt.

4. Flanschteil nach einem der vorhergehenden Ansprüche, **dadurch gekennzeichnet, dass** eine senkrecht zu der Schnittebene bestimmte, minimale Dicke der Stege (14) nicht kleiner als ein Durchmesser der benachbarten Durchbrechungen (13) ist.

5. Flanschteil nach einem der vorhergehenden Ansprüche, **dadurch gekennzeichnet, dass** die Durchbrechungen (13) sich in einem Sockel (10) des Ringflansches (9) befinden, wobei der Sockel (10) an einem den Stegen (14) zugewandten Ende der Durchbrechung (13) jeweils eine Auflagefläche (10b) aufweist.

6. Flanschteil nach Anspruch 5, **dadurch gekennzeichnet, dass**, oberhalb der Auflageflächen (10b) jeweils ein Freiraum (16) angeordnet ist, wobei ein kleinster, senkrecht zu der Achse (A) bestimmter Durchmesser des Freiraums (16) wenigstens um 40% größer ist als ein Durchmesser der Durchbrechungen (13).

7. Flanschteil nach Anspruch 5 oder 6, **dadurch gekennzeichnet, dass** die Stege (14) eine maximale Höhe (a) oberhalb der Auflagefläche (10b) aufweisen, die größer als die Hälfte einer in axialer Richtung bestimmte Länge (B) der Durchbrechungen (13) ist.

8. Flanschteil nach einem der vorhergehenden Ansprüche, **dadurch gekennzeichnet, dass** eine Oberkante der Stege (14) in der Schnittebene eine Verlaufskurve (15) definiert, deren Abszisse durch einen Radius des Ringflansches (9) gebildet ist.

9. Flanschteil nach Anspruch 8, **dadurch gekennzeichnet, dass** die Verlaufskurve (15) einen konkav gebogenen, insbesondere teilkreisförmigen Abschnitt aufweist.

10. Flanschteil nach einem der vorhergehenden Ansprüche, **dadurch gekennzeichnet, dass** ein Außendurchmesser des Ringflansches (9) wenigstens 2 Meter, insbesondere wenigstens 2,5 Meter, beträgt.

11. Verfahren zur Herstellung eines Flanschteils nach einem der vorhergehenden Ansprüche, umfassend die Schritte:
a. Bereitstellen eines ringförmig gebogenen Profilkörpers;
b. Ausbilden der Stege (14) und der Durchbrechungen (13) in dem Profilkörper mittels spanender Bearbeitung.

12. Verfahren nach Anspruch 11, **gekennzeichnet durch** den Schritt:
- Biegen eines geraden Profilkörpers zu dem ringförmigen Profilkörper.

13. Verfahren nach Anspruch 11 oder 12, **dadurch gekennzeichnet, dass** nach einem Anschweißen des Flanschteils an den rohrförmigen Abschnitt des Turms keine Nachbearbeitung des Ringflansches (9) mehr erfolgt.

14. Verwendung eines Flanschteils nach einem der Ansprüche 1 bis 10 zur Erstellung eines Turms einer Windkraftanlage.
